# EUROPÄISCHE PATENTSCHRIFT

(11) **EP 2 689 215 B1**
(45) Veröffentlichungstag und Bekanntmachung des Hinweises auf die Patenterteilung: **12.12.2018**
(21) Anmeldenummer: 12701145.0
(22) Anmeldetag: 30.01.2012
(51) Int. Cl.: G01D 11/24, G01D 5/12, G01D 5/14

(54) **WEGGEBER UND ZUGEHÖRIGE PEDALEINHEIT**
POSITION SENSOR AND CORRESPONDING PEDAL UNIT
CAPTEUR DE DÉPLACEMENT ET UNITÉ À PÉDALE CORRESPONDANTE

(30) Priorität: 24.03.2011 DE 102011006035
(43) Veröffentlichungstag der Anmeldung: 29.01.2014
(73) Patentinhaber: Robert Bosch GmbH, 70442 Stuttgart (DE)
(72) Erfinder: KAISER, Harry, 71706 Markgroeningen (DE); MAITERTH, Eduard, 74074 Heilbronn (DE)
(86) Internationale Anmeldenummer: PCT/EP2012/051401
(87) Internationale Veröffentlichungsnummer: WO 2012/126653

(56) Entgegenhaltungen:
- EP-B1- 0 063 645
- DE-A1-102007 000 649
- DE-A1-102008 062 337

## Beschreibung

### Stand der Technik

Die Erfindung geht aus von einem Weggeber nach Gattung des unabhängigen Patentanspruchs 1 und von einer Pedaleinheit nach der Gattung des unabhängigen Patentanspruchs 9.

Üblicherweise werden bei der Fertigung eines Weggebers separate Baugruppen, insbesondere eine Sensoreinheit und eine Gebereinheit, zu einer gemeinsamen Baueinheit zusammengefasst und vorgefertigt. In diesem Zustand wird mindestens eine elektrische Kennlinie einprogrammiert, welche vorgegebene Abstände zwischen der Gebereinheit und der Sensoreinheit erfordert. Hierfür ist eine unlösbare Vormontage der beiden Baugruppen erforderlich, welche beispielsweise durch Kleben und/oder Löten und/oder Schweißen und/oder Rasten und/oder Schrauben usw. realisiert werden kann. Der fertig montierte Weggeber wird dann an einen Lagerbock eines zu sensierenden Hebels angebracht. Die Sensoreinheit und die Gebereinheit sind üblicherweise mit umspritzten Stahlbuchsen ausgeführt, welche die Vorspannkraft von Befestigungselementen aufnehmen, welche die Sensoreinheit und die Gebereinheit miteinander verbinden und/oder den fertig montierten Weggeber mit dem Lagerbock der Pedal- oder Hebeleinheit verbindet. Der Weggeber, welcher beispielsweise über einen Mitnehmer mit dem Hebel verbunden ist, misst einen Weg bzw. einen Drehwinkel des zu sensierenden Hebels, welcher beispielsweise als Tretkurbel insbesondere als Pedal oder als Klinke usw. ausgeführt sein kann.

In der Offenlegungsschrift DE 10 2007 000 649 A1 wird ein Montageaufbau für einen Weggeber mit einer Sensoreinheit und einer Gebereinheit beschrieben. Die Gebereinheit erfährt über einen Mitnehmer eine Bewegung eines Hebels, so dass die Sensoreinheit diese Bewegung erfasst, wobei die Gebereinheit und die Sensoreinheit separate Gehäuse aufweisen, welche miteinander verbunden werden. Hierbei werden die beiden Gehäuse der Gebereinheit und der Sensoreinheit miteinander durch Laserschweißen verschweißt und durch Befestigungsschrauben über Montagestreben an einer Pedaleinheit befestigt.

In der DE 10 2008 062 337 A1 wird eine Vorrichtung zur Befestigung eines Sensorgehäuses an einem Gehäuse, insbesondere einem Zylindergehäuse eines Gebers beschrieben. Im Sensorgehäuse ist ein als Wegsensor ausgebildeter Sensor angeordnet. Das Sensorgehäuse ist so ausgebildet, dass es mit einer Anlagefläche an einer entsprechenden Anlagefläche des Gehäuses des Geberzylinders formschlüssig anlegbar ist. In der richtigen Position des Sensorgehäuses in Bezug auf das Gehäuse des Geberzylinders durchgreift ein stiftförmiger Niet eine Durchgangsöffnung eines Ansatzteils am Sensorgehäuse und ragt über die der Anlagefläche abgewandte Seite des Ansatzteils hinaus. Der hinausragende Bereich des Niets wird mit Hilfe einer Heißluftvorrichtung erwärmt und derart abgeschmolzen, dass der geschmolzene Bereich des Niets einen Randbereich der Durchgangsöffnung zur Herstellung einer festen Verbindung zwischen dem Sensorgehäuse und dem Gehäuse des Geberzylinders übergreift.

In der EP 0 063 645 A2 wird ein schneller Temperatursensor zur Erfassung einer Ansauglufttemperatur einer Brennkraftmaschine beschrieben. Der beschriebene schnelle Temperatursensor ist zum Einbau in ein Ansaugrohr der Brennkraftmaschine bestimmt und weist ein aus einem duroplastischen Kunststoff spritzgepresstes Gehäuse auf, welches aus einem Unterteil und einem Oberteil besteht. Beide Teile haben einen verbreiterten Flansch, an welchem sie mit zwei durchgehenden Hohlnieten miteinander verbunden sind.

### Offenbarung der Erfindung

Der erfindungsgemäße Weggeber mit den Merkmalen des unabhängigen Patentanspruchs 1 hat demgegenüber den Vorteil, dass die Verbindung zwischen dem Gehäuse der Gebereinheit und dem Gehäuse der Sensoreinheit durch mindestens eine hohle Nietverbindung realisiert ist, in deren Hohlraum mindestens ein Befestigungselement führbar ist. Somit stellen Ausführungsformen der vorliegenden Erfindung eine untrennbare Verbindung zwischen der Gebereinheit und der Sensoreinheit und gleichzeitig eine zur Montage des Weggebers an den Lagerbock der Hebeleinheit erforderliche Führung eines korrespondierenden Befestigungselements zur Verfügung. Bei dieser Art der Verbindung zwischen den beiden Baugruppen wird in vorteilhafter Weise die Montage des fertigen Weggebers erleichtert, da die Führung für das Befestigungselement bereits vorhanden ist. Des Weiteren ermöglichen Ausführungsformen der vorliegenden Erfindung eine platzsparende Verbindung der beiden Baugruppen, da alle erforderlichen Befestigungs- und/oder Verbindungmaßnahmen an einem Bereich durchgeführt werden. Die Verwendung einer Hohlniete zur Verbindung der beiden Baugruppen und zur Führung des Befestigungselements ist zudem materialsparender, da keine umspritzten Stahlbuchsen für das jeweilige Befestigungselement benötigt werden. Des Weiteren kann das mindestens eine Befestigungselement die Gehäuse der beiden Baugruppen nicht durch zu starkes Anziehen beschädigen, da die Hohlniete die Vorspannkraft aufnimmt. Zudem können auch hitzeempfindliche Bauteile in den Baugruppen verwendet werden, da keine Schweiß- und/oder Lötverbindungen zum Montage der beiden Baugruppen verwendet werden.

Ausführungsformen der vorliegenden Erfindung stellen einen Weggeber zur Verfügung, welcher eine Sensoreinheit und einer Gebereinheit umfasst. Die Gebereinheit erfährt über einen Mitnehmer eine Bewegung eines Hebels, welche von der Sensoreinheit erfasst werden kann. Die Gebereinheit und die Sensoreinheit weisen separate Gehäuse auf, welche miteinander verbunden sind. Erfindungsgemäß ist die Verbindung zwischen den Gehäusen der Gebereinheit und der Sensoreinheit durch mindestens eine hohle Nietverbindung realisiert, in deren Hohlraum mindestens ein Befestigungselement zur Montage des Weggebers an einen Lagerbock des Hebels geführt ist.

Unter einer Gebereinheit wird vorliegend eine Baueinheit verstanden, welche einen Signalgeber zur Erzeugung einer physikalischen Größe umfasst. Die erzeugte physikalische Größe ändert sich durch die Bewegung des Hebels über den Mitnehmer mittelbar oder unmittelbar. Ein möglicher Signalgeber ist beispielsweise ein Dauermagnet. Die dazugehörige veränderbare physikalische Größe ist ein Magnetfeld, wobei Magnetfeldlinien des Magnetfelds ihre Richtung in vorteilhafter Weise durch die Bewegung des Hebels ändern. Als weitere mögliche Signalgeber können Quellen von elektromagnetischen Wellen und/oder Schallwellen verwendet werden. Als physikalische Größe kann dann eine Amplitude und/oder Wellenlänge und/oder Wellenfrequenz verwendet werden, welche durch die Bewegung des Hebels verändert werden. Um den Signalgeber vor äußeren Einflüssen zu schützen kann dieser von einer Dichtung umgeben sein.

Unter einer Sensoreinheit wird vorliegend eine Baueinheit verstanden, welche mindestens einen im Verhältnis zum Signalgeber feststehenden Sensor umfasst, welcher anhand der Änderung der vom Signalgeber erzeugten physikalischen Größe die Bewegung des Hebels erfasst. Insbesondere kann die Winkelabhängigkeit der physikalischen Größe erfasst werden. Je nach physikalischer Eigenschaft des Signalgebers umfasst die Sensoreinheit beispielsweise einen Hallsensor und/oder einen magnetoresistiven Sensor und/oder einen induktiven Sensor und/oder einen optische Sensor und/oder einen Ultraschallsensor und/oder einen Hochfrequenzsensor und/oder einen Radarsensor bzw. einen anderen geeigneten Sensor. Des Weiteren umfasst die Sensoreinheit eine Auswerteeinheit, welche die Änderung der physikalischen Größe in ein elektrisches Signal, vorzugsweise ein Stellsignal umwandelt. Eine Schnittstelle, welche beispielsweise als Steckverbindung ausgeführt ist, gibt das erzeugte Stellsignal zur Weiterverarbeitung an eine Steuereinheit ab.

Durch die in den abhängigen Ansprüchen aufgeführten Maßnahmen und Weiterbildungen sind vorteilhafte Verbesserungen des im unabhängigen Patentanspruch 1 angegebenen Weggebers und der im unabhängigen Patentanspruch 9 abgegebenen Pedaleinheit möglich.

Besonders vorteilhaft ist, dass die Verbindung zwischen den Gehäusen der Gebereinheit und der Sensoreinheit des erfindungsgemäßen Weggebers als mindestens eine Rohrniete ausgeführt ist. Rohrnieten sind in vorteilhafter Weise als Massenprodukt in verschiedenen geeigneten Ausführungsformen und in großen Mengen kostengünstig erwerbbar.

In vorteilhafter Ausgestaltung des erfindungsgemäßen Weggebers weist das Gehäuse der Gebereinheit und/oder das Gehäuse der Sensoreinheit am Verbindungsbereich der beiden Baugruppen einen Spritzschutz auf. Der Signalgeber der Gebereinheit ist im Verbindungsbereich zwischen den beiden Baugruppen angeordnet. Um den Signalgeber vor äußeren Einflüssen insbesondere vor Feuchtigkeit zu schützen, ist zwischen dem Gehäuse der Gebereinheit und dem Sensorgehäuse eine Dichtung angeordnet. Zudem verhindert der Spritzschutz im Verbindungsbereich zwischen den beiden Baugruppen, dass ein Wasserstrahl, welcher beispielsweise von einem Reinigungsgerät insbesondere von einem Hochdruckreiniger stammt, direkt auf die Dichtung trifft und diese beschädigt bzw. unwirksam macht. Des Weiteren verhindert der Spitzschutz in vorteilhafter Weise, dass grobe Verunreinigungen ins Innere der Gebereinheit und/oder zwischen die Gebereinheit und die Sensoreinheit gelangen und so die Beweglichkeit des Signalgebers blockieren und/oder die Gebereinheit verstopfen und/oder das Gebersignal verfälschen.

In weiterer vorteilhafter Ausgestaltung des erfindungsgemäßen Weggebers ist der Spritzschutz als Erhöhung und/oder Schräge und/oder Kante und/oder Kragen ausgeführt. Dies ermöglicht einen effektiven an die äußeren Gegebenheiten angepassten Spritzschutz, welcher die Funktionsdauer des Weggebers erhöht, indem innere Bauteile nicht durch Verschmutzung und/oder Feuchtigkeit vorzeitig abgenutzt und/oder beschädigt werden.

In weiterer vorteilhafter Ausgestaltung des erfindungsgemäßen Weggebers nimmt das Gehäuse der Gebereinheit auch den Mitnehmer auf. Auf diese Weise wird verhindert, dass Feuchtigkeit und/oder Verunreinigungen über den Mitnehmer in das Innere des Weggebers gelangen. Des Weiteren schützt das Gehäuse der Gebereinheit den Mitnehmer vor äußeren Einflüssen, wie beispielsweise vor Kälte und/oder Wärme und/oder Feuchtigkeit und/oder äußeren Kräften, welche nicht von der zu sensierenden Hebelbewegung stammen, mit welchem der Mitnehmer gekoppelt ist. Auf diese Weise wird sichergestellt, dass lediglich die zu sensierenden Bewegungen des Hebels über den Mitnehmer übertragen wird, aber keine unerwünschten äußeren Erschütterungen und/oder Vibrationen. Des Weiteren schützt das Gehäuse der Gebereinheit den Mitnehmer vor Beschädigungen.

In weiterer vorteilhafter Ausgestaltung des erfindungsgemäßen Weggebers ist der Mitnehmer mit einer Welle verbunden und treibt diese Welle an, wobei die Welle in einer Hohlachse der Gebereinheit gelagert ist und den Signalgeber umfasst, welcher mit der Welle in Wirkungsverbindung steht, wobei der Signalgeber eine physikalische Größe erzeugt, welche sich mit der Bewegung der Welle ändert. Die Sensoreinheit erfasst die veränderbare physikalische Größe und wertet diese aus. Der Mitnehmer ist somit auf einer Seite mit dem Hebel und auf der anderen Seite mit der Welle gekoppelt. In Folge einer Bewegung des Hebels wird die Welle über den Mitnehmer beispielsweise gedreht. Der Signalgeber ist beispielsweise durch Löten und/oder Kleben und/oder Schrauben an der Welle befestigt. Auf diese Weise bewegt sich der Signalgeber mit der Welle. Der Signalgeber und der Sensor der Sensoreinheit sind über einen Luftspalt voneinander getrennt. Dies ermöglicht eine reibungslose Übertragung des Signals. Des Weiteren kann der Sensor vollständig im Gehäuse der Sensoreinheit untergebracht werden, falls das Gehäuse aus einem Material besteht, welches für die physikalische Größe des Signalgebers durchlässig ist. Ist der Signalgeber beispielsweise als Dauermagnet ausgeführt, können die magnetischen Feldlinien das Gehäuse durchdringen und der Sensor kann beispielsweise die durch die Drehbewegung des Signalgebers bewirkten Änderungen des Magnetfeldes erfassen. Somit kann der Sensor durch das Gehäuse vor äußeren Einflüssen geschützt werden. Da es eine Vielzahl von möglichen Signalgebern gibt, welche eine Bewegung in eine veränderbare physikalische Größe umwandeln, erhält man eine Vielzahl von Erfassungsmöglichkeiten einer Weg- und/oder Winkeländerung, welche an die korrespondierenden zu erfassende Bewegung anpassbar sind.

In weiterer vorteilhafter Ausgestaltung des erfindungsgemäßen Weggebers ist ein Federelement, welches als Druckfeder ausgeführt ist, um die Hohlachse der Gebereinheit angebracht, wobei das Federelement den Abstand zwischen dem Mitnehmer und der Welle und/oder den Abstand zwischen dem Signalgeber und der Sensoreinheit reguliert. Dadurch wird der an die Welle angebrachte Mitnehmer in vorteilhafter Weise immer nach einer Seite gedrückt. Dadurch wird die Erzeugung von Klappergeräuschen trotz eines erforderlichen Axialspiels der Welle in der Hohlachse verhindert, so dass der erfindungsgemäße Weggeber besonders geräuscharm betrieben werden kann. Des Weiteren wird der Abstand des Signalgebers zum Sensor immer auf gleicher Distanz gehalten und somit die Messgenauigkeit erhöht.

In weiterer vorteilhafter Ausgestaltung des erfindungsgemäßen Weggebers ist das Federelement so angebracht, dass die Vorspannkraft des Federelements den Mitnehmer in eine vorgegebene Ausgangsposition bringt. Hierbei wird das Federelement in vorteilhafter Weise am Gehäuse der Gebereinheit und am Mitnehmer durch Einhaken, Verrasten, Kleben usw. angebracht. Die Rückstellkraft des Federelements bringt den Mitnehmer in seine Ausgangsposition zurück. Auf diese Weise erhält man eine konstante Grundeinstellung für einen unbetätigten Zustand, in welchem sich der zu sensierende Hebel ebenfalls in seiner Ausgangsposition befindet. Durch die zuverlässige Rückführung des Mitnehmers in seine Ausgangsposition kommt es zu keiner Änderung der ermittelten Kennlinie. Des Weiteren entsteht durch die Rückstellkraft des Federelements ein Toleranzversatz, welcher elastische Betätigungsverformungen des zu sensierenden Hebels ausgleicht und solche unerwünschten Verformungen nicht auf die Geberreinheit überträgt.

Ausführungsformen des erfindungsgemäßen Weggebers können beispielsweise in einer Pedaleinheit mit einem Pedalhebel und einem Lagerbock zur Ermittlung des Pedalwegs des Pedalhebels eingesetzt werden. Hierbei wird der Weggeber am Lagerbock des Pedalhebels befestigt und über den Mitnehmer mit dem Pedalhebel gekoppelt. Da der Weggeber bereits fertig montiert ist kann dieser schnell an jede beliebige Pedaleinheit angeschlossen werden.

In vorteilhafter Ausgestaltung der erfindungsgemäßen Pedaleinheit wird der Weggeber durch mindestens ein Befestigungselement, welches durch den Hohlraum einer Rohrniete geführt ist, mit dem Lagerbock der Pedaleinheit verbunden. Dies ermöglicht eine äußert schnelle und kostengünstige Montage des Weggebers an die Pedaleinheit.

Ein Ausführungsbeispiel der Erfindung ist in den Zeichnungen dargestellt und wird in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine Explosionsdarstellung eines Ausführungsbeispiels eines erfindungsgemäßen Weggebers von oben.
Fig. 2 zeigt eine Explosionsdarstellung des Ausführungsbeispiels eines erfindungsgemäßen Weggebers aus Fig. 1 von unten.
Fig. 3 zeigt eine schematische perspektivische Darstellung der montierten Gebereinheit für den erfindungsgemäßen Weggeber aus Fig. 1 oder 2.
Fig. 4 zeigt eine weitere schematische perspektivische Darstellung der montierten Gebereinheit für den erfindungsgemäßen Weggeber aus Fig. 1 oder 2.
Fig. 5 zeigt eine schematische perspektivische Darstellung der montierten Sensoreinheit für den erfindungsgemäßen Weggeber aus Fig. 1 oder 2.
Fig. 6 zeigt eine weitere schematische perspektivische Darstellung der montierten Sensoreinheit für den erfindungsgemäßen Weggeber aus Fig. 1 oder 2.
Fig. 7 zeigt eine schematische Querschnittdarstellung des montierten erfindungsgemäßen Weggebers aus Fig. 1 und 2.
Fig. 8 zeigt eine schematische Längsschnittdarstellung des erfindungsgemäßen Weggebers aus Fig. 1 und 2.

### Ausführungsformen der Erfindung

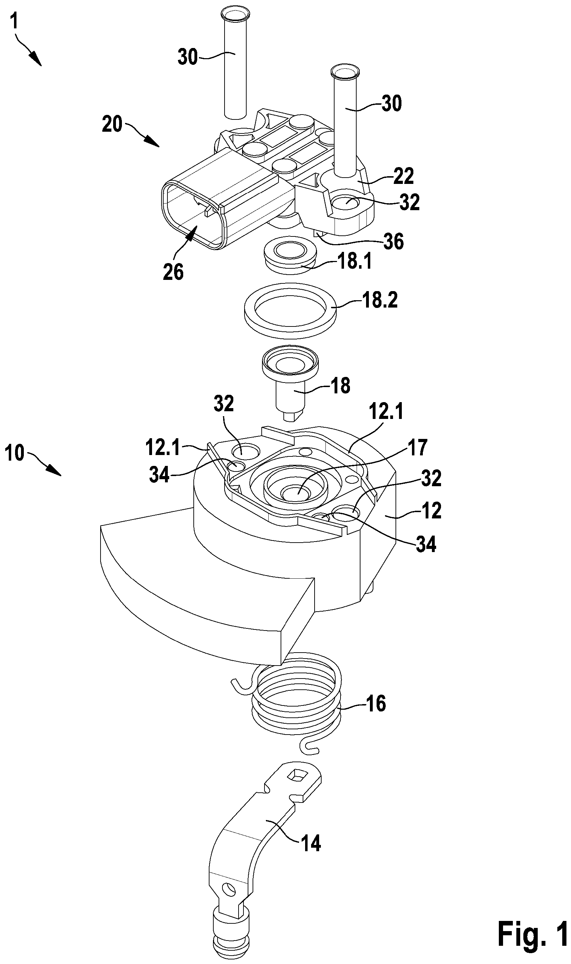

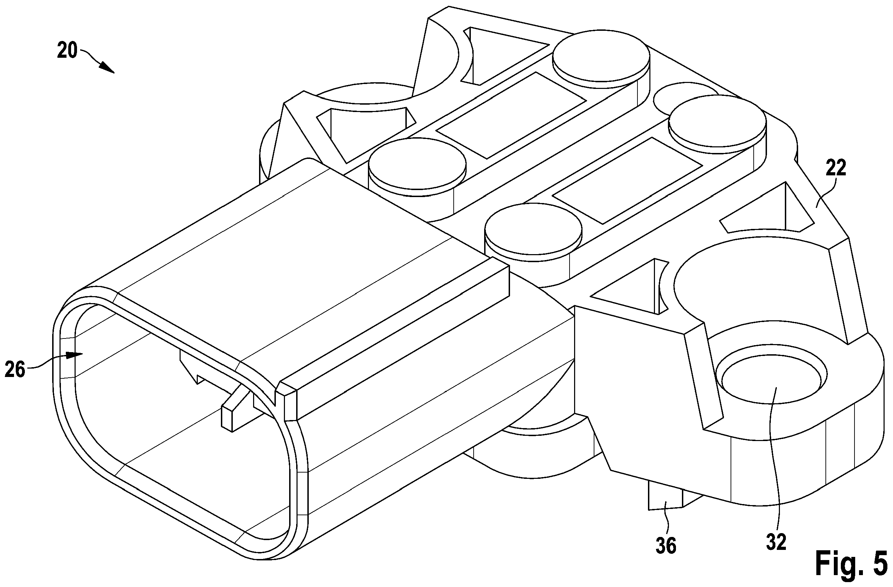

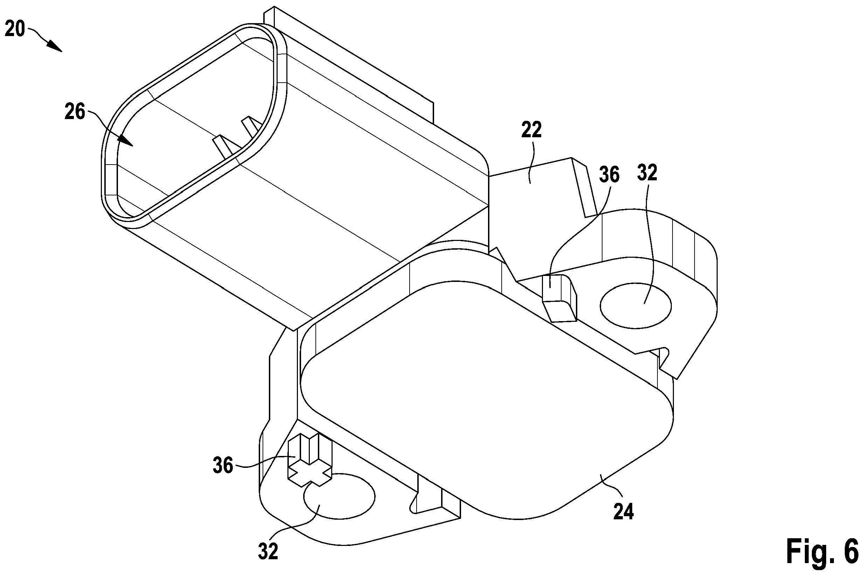

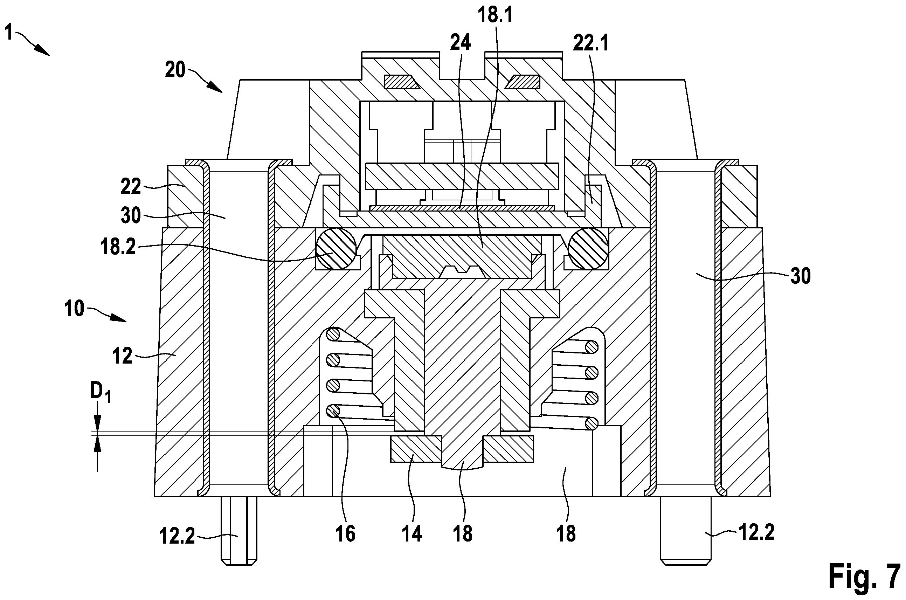

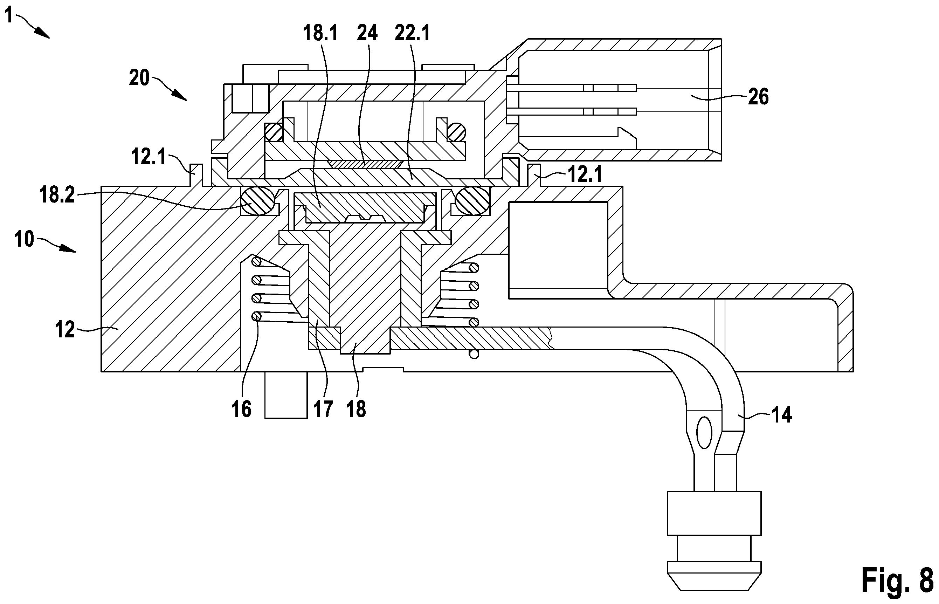

Wie aus Fig. 1 bis 8 ersichtlich ist, umfasst das dargestellte Ausführungsbeispiel eines erfindungsgemäßen Weggebers 1 eine Sensoreinheit 20 und eine Gebereinheit 10. Die Gebereinheit 10 erfährt über einen Mitnehmer 14 eine Bewegung eines zu sensierenden nicht dargestellten Hebels, welche von der Sensoreinheit 20 erfasst wird. Wie aus Fig. 1 bis 8 weiter ersichtlich ist weisen die Gebereinheit 10 und die Sensoreinheit 20 separate Gehäuse 12, 22 auf, welche miteinander verbunden sind und im dargestellten Ausführungsbeispiel als Kunststoffgehäuse ausgeführt sind. Die Verbindung zwischen den Gehäusen 12, 22 der Gebereinheit 10 und der Sensoreinheit 20 ist durch mindestens eine hohle Nietverbindung insbesondere durch eine Rohrniete 30 realisiert, in deren Hohlraum mindestens ein nicht dargestelltes Befestigungselement geführt werden kann.

Zur Verbindung der Sensoreinheit 20 mit der Gebereinheit 10 wird die Sensoreinheit 20 über zwei Zentrierzapfen 36 und zwei korrespondierende Zentrierbohrungen 34 in der Gebereinheit 10 lagerichtig an der Gebereinheit 10 positioniert. Die Gehäuse 12, 22 der beiden Baugruppen 10, 20 sind so geformt, dass die Sensoreinheit 20 den oberen Öffnungsbereich der Gerbeinheit 10 bis auf einen schmalen Bereich zwischen der Unterseite der Sensoreinheit 20 und der Oberseite der Gebereinheit 10 verschließt. Die Rohrnieten 30 werden durch vorgesehene Einführungsöffnungen 32 im Gehäuse 22 der Sensoreinheit 20 und im Gehäuse der Gebereinheit 10 geführt und nach dem Einführen durch entsprechende Werkzeuge aufgeweitet und vernietet. Dadurch wird das Gehäuse 22 der Sensoreinheit 20 fest mit dem Gehäuse 12 der Gebereinheit 10 verbunden und die Rohrniete 30 unverlierbar mit der entstehenden Baueinheit befestigt. Zwischen dem Gehäuse 12 der Gebereinheit 10 und dem Gehäuse 22 der Sensoreinheit 20 ist eine Dichtung 18.2 angeordnet, um das Innere der Gebereinheit 10 vor äußeren Einflüssen insbesondere vor Feuchtigkeit und Verunreinigungen zu schützen. Durch die Nietverbindung 30 wird die Dichtung 18.2 an den Gehäuseboden 22.1 des Sensorgehäuses 22 gedrückt, so dass eine bessere Abdichtung der Gebereinheit 10 erzielt werden kann.

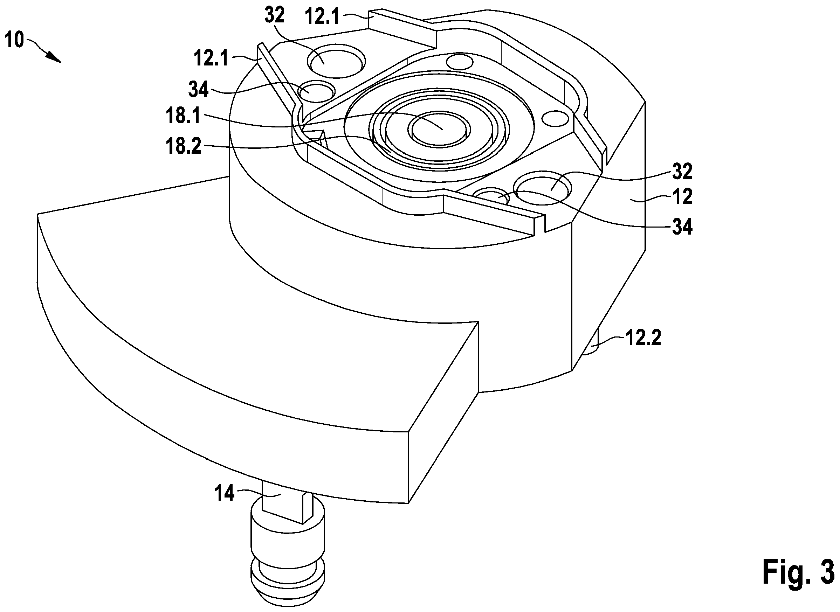

Wie insbesondere aus Fig. 3 ersichtlich ist, weist das Gehäuse 12 der Gebereinheit 10 im dargestellten Ausführungsbeispiel einen Spritzschutz 12.1 auf, um den Verbindungsbereich zwischen der Sensoreinheit 20 und der Gebereinheit vor äußeren Einflüssen, wie beispielsweise Verunreinigungen zu schützen. Zudem verhindert der Spritzschutz 12.1 im Verbindungsbereich zwischen den beiden Baugruppen 10, 20, dass ein Wasserstrahl, welcher beispielsweise von einem Reinigungsgerät insbesondere von einem Hochdruckreiniger stammt, direkt auf die Dichtung 18.2 trifft und diese beschädigt bzw. unwirksam macht. Bei alternativen nicht dargestellten Ausführungsformen kann der Spritzschutz 12.1 am Gehäuseboden 22.1 des Sensorgehäuses 22 oder sowohl am Sensorgehäuse 22 als auch am Gebergehäuse 12 angeordnet werden.

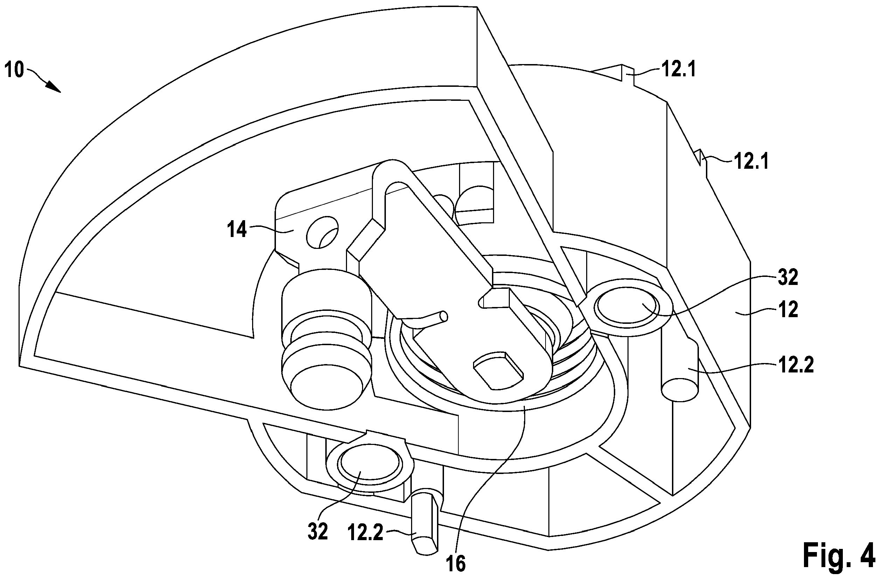

Wie insbesondere aus Fig. 4 weiter ersichtlich ist, nimmt das Gehäuse 12 der Gebereinheit 10 auch den Mitnehmer 14 nahezu vollständig auf, wodurch der Mitnehmer 14 ebenfalls vor unerwünschten äußeren Einflüssen geschützt ist. Der Mitnehmer 14 ist mit einer Welle 18 verbunden, welche in einer Hohlachse 17 der Gebereinheit 10 gelagert ist und vom Mitnehmer 14 angetrieben wird. Hierbei führt die Welle 18 durch die Bewegung des Mitnehmers 14 eine Drehbewegung aus. Der Signalgeber 18.1 ist im dargestellten Ausführungsbeispiel als Dauermagnet ausgeführt und fest mit der Welle 18 verbunden, so dass der Signalgeber 18.1 sich mit der Welle 18 bewegt. Durch die Drehbewegung der Welle 18 ändert sich das von der Sensoreinheit 20 beispielsweise über mindestens einen als Hallelement ausgeführten Sensor 24 erfasste Magnetfeld des Dauermagneten 18.1. Der oben beschriebene Spritzschutz 12.1 verhindert in vorteilhafter Weise, dass grobe Verunreinigungen ins Innere der Gebereinheit 10 und/oder zwischen die Gebereinheit 10 und die Sensoreinheit 20 gelangen und so die Beweglichkeit der Welle 18 mit dem Signalgebers 18.1 blockieren und/oder die Gebereinheit 20 verstopfen und/oder das Gebersignal verfälschen. Der in Bezug zum Signalgeber 18.1 feststehende Sensor 24 registriert die Änderung des Magnetfelds des Signalgebers 18.1. Im dargestellten Ausführungsbeispiel ist der als Hallelement ausgeführte Sensor 24 über einen Luftspalt und den Gehäuseboden 22.1 vom Signalgeber 18.1 der Gebereinheit 10 getrennt. Der als Hallelement ausgeführte Sensor 24 übersetzt eine Position des Hebels und/oder des Mitnehmers 14 in ein Stellsignal. Ausführungsformen der vorliegenden Erfindung stellen eine Sensoreinheit 20 mit einer Steckeraufnahme 26 zur Verfügung, über welche eine elektrische Verbindung zu einer Steuereinheit herstellbar ist, welche das erzeugte Stellsignal empfängt und auswertet.

Wie aus Fig. 1 bis 8 weiter ersichtlich ist, weist die Gebereinheit 10 ein Federelement 16 auf, welches um die Hohlachse 17 der Gebereinheit 10 gewickelt ist. Das als Schenkelfeder ausführte Federelement 16 dient in erster Linie der Rückstellung des Mitnehmers 14, ist aber gleichzeitig auch als Druckfeder ausgelegt. Dadurch wird der in die Welle 14 eingeklebte Dauermagnet 18.1 immer nach einer Seite gedrückt. Dadurch reduziert das Federelement 16 das erforderliche Axialspiel D1 zwischen der Welle 18 und einem korrespondierenden Lager, das beispielsweise als Bundlager ausgeführt ist, und verhindert, dass die Welle 14 im Bundlager trotz des notwendigen Axialspiels D1 Klappergeräusche erzeugt. Ferner wird der Abstand des Dauermagneten zum als Hallelement ausgeführten Sensor 24 immer auf gleicher Distanz gehalten und somit die Messgenauigkeit erhöht. Das Federelement 16 ist so angebracht, dass die Vorspannkraft des Federelements 16 den Mitnehmer 14 in eine vorgegebene Ausgangsposition bringt, wenn der zu sensierende Hebel einen unbetätigten Zustand aufweist.

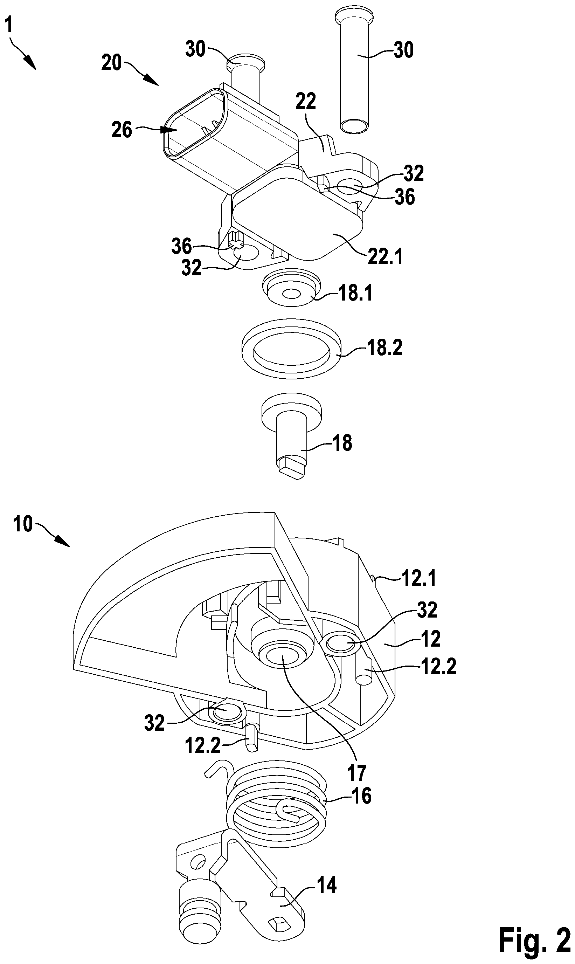

Ausführungsformen des erfindungsgemäßen Weggebers können beispielsweise in einer nicht dargestellten Pedaleinheit mit einem Pedalhebel und einem Pedalbock zur Erfassung des Pedalwegs des Pedalhebels eingesetzt werden. Wie insbesondere aus Fig. 2 und 4 ersichtlich ist, weist das Gehäuse 12 der Gebereinheit Zapfen 12.2 zur Positionierung bzw. Vorfixierung der gemeinsamen Baueinheit an dem nicht dargestellten Pedalbock der Pedaleinheit auf.

## Patentansprüche

1. Weggeber mit einer Sensoreinheit (20) und einer Gebereinheit (10), welche über einen Mitnehmer (14) eine Bewegung eines Hebels erfährt, so dass die Sensoreinheit (20) diese Bewegung erfasst, wobei die Gebereinheit (10) und die Sensoreinheit (20) separate Gehäuse (12, 22) aufweisen, welche miteinander verbunden sind, **dadurch gekennzeichnet, dass** die Verbindung zwischen den Gehäusen (12, 22) der Gebereinheit (10) und der Sensoreinheit (20) durch mindestens eine hohle Nietverbindung (30) realisiert ist, in deren Hohlraum mindestens ein Befestigungselement zur Montage des Weggebers (1) an einen Lagerbock des Hebels geführt ist.

2. Weggeber nach Anspruch 1, **dadurch gekennzeichnet, dass** die mindestens eine hohle Nietverbindung als Rohrniete (30) ausgeführt ist.

3. Weggeber nach Anspruch 1 oder 2, **dadurch gekennzeichnet, dass** das Gehäuse (12) der Gebereinheit (10) und/oder das Gehäuse (22) der Sensoreinheit (20) einen Spritzschutz (12.1) am Verbindungsbereich aufweist.

4. Weggeber nach Anspruch 3, **dadurch gekennzeichnet, dass** der Spritzschutz (12.1) als Erhöhung und/oder Schräge und/oder Kante und/oder Kragen ausgeführt ist.

5. Weggeber nach einem der Ansprüche 1 bis 4, **dadurch gekennzeichnet, dass** das Gehäuse (12) der Gebereinheit (10) den Mitnehmer (14) aufnimmt.

6. Weggeber nach einem der Ansprüche 1 bis 5, **dadurch gekennzeichnet, dass** der Mitnehmer (14) mit einer Welle (18) verbunden ist und diese Welle (18) antreibt, wobei die Welle (18) in einer Hohlachse (17) der Gebereinheit (10) gelagert ist und einen Signalgeber (18.1) umfasst, welcher mit der Welle (18) in Wirkungsverbindung steht, wobei der Signalgeber (18.1) eine physikalische Größe erzeugt, welche sich mit der Bewegung der Welle (18) ändert, und wobei die Sensoreinheit (20) die veränderbare physikalische Größe erfasst und auswertet.

7. Weggeber nach einem der Ansprüche 1 bis 6, **gekennzeichnet durch** ein Federelement (16), welches um die Hohlachse (17) der Gebereinheit (10) angebracht ist, wobei das Federelement (16) den Abstand zwischen dem Mitnehmer (14) und der Welle (18), und/oder den Abstand zwischen dem Signalgeber (18.1) und der Sensoreinheit (20) reguliert.

8. Weggeber nach Anspruch 7, **dadurch gekennzeichnet, dass** das Federelement (16) so angebracht ist, dass die Vorspannkraft des Federelements (16) den Mitnehmer (14) in eine vorgegebene Ausgangsposition bringt.

9. Pedaleinheit mit einem Pedalhebel, einem Lagerbock und einem Weggeber (1), welcher einen Weg des Pedalhebels erfasst, **dadurch gekennzeichnet, dass** der Weggeber (1) als Weggeber (1) nach einem der Ansprüche 1 bis 8 ausgeführt ist.

10. Pedaleinheit nach Anspruch 9, **dadurch gekennzeichnet, dass** der Weggeber (1) durch das mindestens eine Befestigungselement, welches durch den Hohlraum der hohlen Nietverbindung (30) geführt ist, mit dem Lagerbock verbunden ist.

## Claims

1. Position encoder having a sensor unit (20) and a position encoder unit (10) which follows a motion of a lever by means of a driver (14), with the result that the sensor unit (20) senses this motion, wherein the position encoder unit (10) and the sensor unit (20) have separate housings (12, 22) which are connected to one another, **characterized in that** the connection between the housings (12, 22) of the position encoder unit (10) and the sensor unit (20) is implemented by means of at least one hollow riveted connection (30), in the cavity of which at least one attachment element for mounting the position encoder (1) on a bearing block of the lever is guided.

2. Position encoder according to Claim 1, **characterized in that** the at least one hollow riveted connection is embodied as a tubular rivet (30).

3. Position encoder according to Claim 1 or 2, **characterized in that** the housing (12) of the position encoder unit (10) and/or the housing (22) of the sensor unit (20) have/has a spray protection means (12.1) at the connection region.

4. Position encoder according to Claim 3, **characterized in that** the spray protection means (12.1) is embodied as a raised portion and/or oblique portion and/or edge and/or collar.

5. Position encoder according to one of Claims 1 to 4, **characterized in that** the housing (12) of the position encoder unit (10) accommodates the driver (14) .

6. Position encoder according to one of Claims 1 to 5, **characterized in that** the driver (14) is connected to a shaft (18) and drives this shaft (18), wherein the shaft (18) is mounted in a hollow axle (17) of the position encoder unit (10) and comprises a signal encoder (18.1) which is in operative connection with the shaft (18), wherein the signal encoder (18.1) generates a physical variable which changes with the motion of the shaft (18), and wherein the sensor unit (20) senses and evaluates the changeable physical variable.

7. Position encoder according to one of Claims 1 to 6, **characterized by** a spring element (16) which is mounted about the hollow axle (17) of the position encoder unit (10), wherein the spring element (16) regulates the distance between the driver (14) and the shaft (18), and/or the distance between the signal encoder (18.1) and the sensor unit (20).

8. Position encoder according to Claim 7, **characterized in that** the spring element (16) is mounted in such a way that the prestressing force of the spring element (16) moves the driver (14) into a predefined home position.

9. Pedal unit having a pedal lever, a bearing block and a position encoder (1) which senses travel of the pedal lever, **characterized in that** the position encoder (1) is embodied as a position encoder (1) according to one of Claims 1 to 8.

10. Pedal unit according to Claim 9, **characterized in that** the position encoder (1) is connected to the bearing block by means of the at least one attachment element which is guided through the cavity of the hollow riveted connection (30).

## Revendications

1. Transmetteur de déplacement, comprenant une unité à détecteur (20) et une unité à transmetteur (10), laquelle éprouve un mouvement d'un levier par le biais d'un élément d'entraînement (14), de sorte que l'unité à détecteur (20) détecte ce mouvement, l'unité à transmetteur (10) et l'unité à détecteur (20) possédant des boîtiers (12, 22) séparés qui sont reliés entre eux, **caractérisé en ce que** la liaison entre les boîtiers (12, 22) de l'unité à transmetteur (10) et de l'unité à détecteur (20) est réalisée par au moins un assemblage riveté creux (30), dans l'espace creux duquel est passé au moins un élément de fixation servant au montage du transmetteur de déplacement (1) sur un support de palier du levier.

2. Transmetteur de déplacement selon la revendication 1, **caractérisé en ce que** l'au moins un assemblage riveté creux est réalisé sous la forme de rivets tubulaires (30).

3. Transmetteur de déplacement selon la revendication 1 ou 2, **caractérisé en ce que** le boîtier (12) de l'unité à transmetteur (10) et/ou le boîtier (22) de l'unité à détecteur (20) possèdent une protection contre les projections (12.1) au niveau de la zone d'assemblage.

4. Transmetteur de déplacement selon la revendication 3, **caractérisé en ce que** la protection contre les projections (12.1) est réalisée sous la forme d'un bossage et/ou d'un biseau et/ou d'un bord et/ou d'une collerette.

5. Transmetteur de déplacement selon l'une des revendications 1 à 4, **caractérisé en ce que** le boîtier (12) de l'unité à transmetteur (10) accueille l'élément d'entraînement (14).

6. Transmetteur de déplacement selon l'une des revendications 1 à 5, **caractérisé en ce que** l'élément d'entraînement (14) est relié à un arbre (18) et entraîne cet arbre (18), l'arbre (18) étant logé dans un axe creux (17) de l'unité à transmetteur (10) et comportant un transmetteur de signal (18.1) qui se trouve en liaison fonctionnelle avec l'arbre (18), le transmetteur de signal (18.1) générant une grandeur physique qui varie en fonction du mouvement de l'arbre (18), et l'unité à détecteur (20) détectant et interprétant la grandeur physique variable.

7. Transmetteur de déplacement selon l'une des revendications 1 à 6, **caractérisé par** un élément ressort (16) qui est monté autour de l'axe creux (17) de l'unité à transmetteur (10), l'élément ressort (16) régulant l'écart entre l'élément d'entraînement (14) et l'arbre (18), et/ou l'écart entre le transmetteur de signal (18.1) et l'unité à détecteur (20).

8. Transmetteur de déplacement selon la revendication 7, **caractérisé en ce que** l'élément ressort (16) est monté de telle sorte que la force de précontrainte de l'élément ressort (16) amène l'élément d'entraînement (14) dans une position initiale prédéfinie.

9. Unité à pédale comprenant un levier de pédale, un support de palier et un transmetteur de déplacement (1) qui détecte un déplacement du levier de pédale, **caractérisée en ce que** le transmetteur de déplacement (1) est réalisé sous la forme d'un transmetteur de déplacement (1) selon l'une des revendications 1 à 8.

10. Unité à pédale selon la revendication 9, **caractérisée en ce que** le transmetteur de déplacement (1) est relié au support de palier par le biais de l'au moins un élément de fixation qui est passé à travers l'espace creux de l'assemblage riveté creux (30).
